# EUROPÄISCHE PATENTSCHRIFT

(11) **EP 1 329 643 B1**
(45) Veröffentlichungstag und Bekanntmachung des Hinweises auf die Patenterteilung: **05.07.2006**
(21) Anmeldenummer: 03000841.1
(22) Anmeldetag: 15.01.2003
(51) Int. Cl.: F16D 55/40, B60T 17/08, F16D 65/14

(54) **Parkbremse für Kraftfahrzeuge**
Parking brake for vehicles
Frein de stationnement pour véhicules

(30) Priorität: 16.01.2002 DE 10201366
(43) Veröffentlichungstag der Anmeldung: 23.07.2003
(73) Patentinhaber: ZF FRIEDRICHSHAFEN AG, 88038 Friedrichshafen (DE)
(72) Erfinder: Saibold, Friedrich, 94036 Passau (DE); Reischl, Maximilian, 94118 Jandelsbrunn (DE)

(56) Entgegenhaltungen:
- EP-A- 0 044 007
- EP-A- 0 913 304
- DE-A1- 3 635 118
- DE-A1- 19 504 451

## Beschreibung

Die Erfindung betrifft eine Parkbremse für Kraftfahrzeuge mit den Merkmalen des Oberbegriffs des Anspruchs 1 und Verfahren zur Montage einer Parkbremse für Kraftfahrzeuge mit den Merkmalen der Oberbegriffe der Ansprüche 2 und 3.

Bekannt sind Parkbremsen für Kraftfahrzeuge, die durch Federkraft zu schließen und mittels hydraulischem Druck zu lösen sind. Derartige Parkbremsen für Kraftfahrzeuge weisen mindestens eine Bremslamelle auf einem Achskörper in einem Bremsgehäuse auf und Federn, mit denen die Bremslamellen zusammengedrückt werden. Ein Kolben löst die Bremslamellen gegen die Kraft der Federn, wenn ein Kolbenraum mit hydraulischem Druck beaufschlagt wird. Mindestens eine Bohrung im Kolben mit je einem Bolzen ist vorgesehen, wobei der Bolzen die Federkraft durch eine den Kolbenraum hydraulisch dicht begrenzende Scheibe auf die Bremslamellen überträgt. Der Bolzen ist mit einem zylindrischen Abschnitt in der Bohrung des Kolbens gehalten.

Gemäß einem Stand der Technik ist der Bolzen mit einem Schraubgewinde in der als Sackbohrung ausgebildeten Bohrung des Kolbens montiert. Vorteilhaft bei diesem Stand der Technik ist es, daß radialer Versatz der Bohrungen für die Bolzen in der Scheibe beim Schrauben der Bolzen ausgeglichen werden kann. Nachteilig ist es, daß sich Schrauben lockern können und der Kolbenraum dann undicht wird, so daß nicht mehr gewährleistet werden kann, daß die Parkbremse gelöst werden kann.

Aus der EP 0 913 304 A2 ist eine Parkbremse für Kraftfahrzeuge bekannt, bei der die Bolzen im zylindrischen Abschnitt in der Bohrung des Kolbens und am freien Ende des zylindrischen Abschnitts je eine radiale Nut aufweisen. Zur Befestigung des Bolzens im Kolben ist in die radiale Nut im zylindrischen Abschnitt in der Bohrung ein O-Ring und in die radiale Nut am freien Ende des zylindrischen Abschnitts ein Sicherungsring eingesetzt. Nachteilig bei diesem Stand der Technik ist es, daß genaue Fertigungstoleranzen zwischen Scheibe, Bolzen und Kolben erforderlich sind.

Aufgabe der Erfindung ist es, eine Parkbremse für Kraftfahrzeuge zu schaffen, die die Nachteile des Standes der Technik nicht aufweist und vorteilhafte Verfahren zur Montage einer derartigen Parkbremse anzugeben.

Die Lösung erfolgt mit einer Parkbremse für Kraftfahrzeuge mit den Merkmalen des Anspruchs 1 und mit Verfahren zur Montage einer derartigen Parkbremse mit den Merkmalen der Ansprüche 2 und 3.

Gemäß der Erfindung weist eine Parkbremse für Kraftfahrzeuge mindestens eine Bremslamelle auf einem Achskörper in einem Bremsgehäuse auf und Federn, mit denen die Bremslamellen zusammengedrückt werden. Ein Kolben löst die Bremslamellen gegen die Kraft der Federn, wenn ein Kolbenraum mit hydraulischem Druck beaufschlagt wird. Eine Scheibe begrenzt den Kolbenraum hydraulisch dicht und mindestens eine Bohrung im Kolben ist vorgesehen mit je einem Bolzen, der mit einem zylindrischen Abschnitt in der Bohrung des Kolbens gehalten ist, wobei der Bolzen im zylindrischen Abschnitt in der Bohrung des Kolbens eine radiale Nut aufweist. Gemäß der Erfindung ist die Bohrung im Kolben als Sackbohrung mit einer radialen Nut ausgebildet ist, und ein Sprengring ist vorgesehen, der in die radialen Nuten des zylindrischen Abschnitts des Bolzens und der Bohrung im Kolben montiert werden kann. Vorteilhafterweise ergibt sich bei der erfindungsgemäßen Parkbremse für Kraftfahrzeuge, daß auf grund der Sackbohrung Undichtigkeiten ausgeschlossen sind. Radiales Spiel zwischen Bolzen und Kolbenbohrung ist zulässig, so daß sich besondere Anforderungen an die Fertigungstoleranzen erübrigen.

Gemäß der Erfindung kann die Montage einer Parkbremse für Kraftfahrzeuge so erfolgen, daß der Sprengring in die radiale Nut des zylindrischen Abschnitts des Bolzens eingesetzt wird, und der Bolzen mit dem Sprengring in die Bohrung eingeführt wird bis der Sprengring in die radiale Nut der Bohrung im Kolben einschnappt.

Gemäß der Erfindung kann die Montage einer Parkbremse für Kraftfahrzeuge auch so erfolgen, daß der Sprengring in die radiale Nut der Bohrung im Kolben eingesetzt wird, und der Bolzen in die Bohrung eingeführt wird bis der Sprengring in die radiale Nut des zylindrischen Abschnitts des Bolzens einschnappt.

Weitere Merkmale sind der Figuren-Beschreibung zu entnehmen.
Es zeigen:

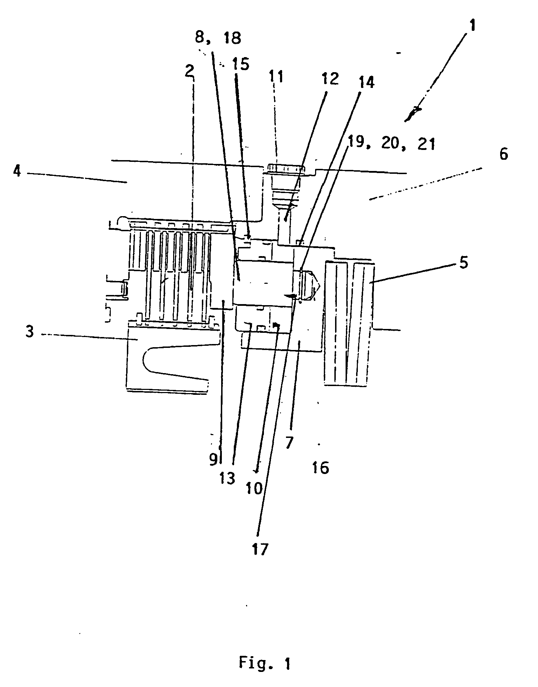

- Fig. 1: eine Teil-Ansicht einer Parkbremse für Kraftfahrzeuge gemäß der Erfindung;

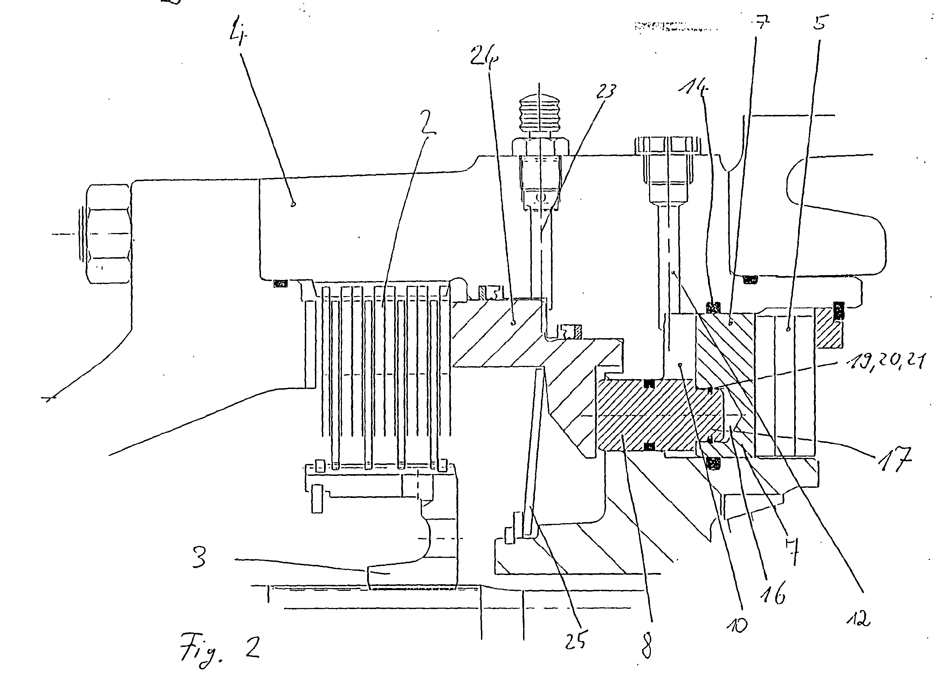

- Fig. 2: eine Teil-Ansicht einer Bremsanordnung mit Betriebs- und Feststellbremse.

### Fig. 1:

Eine Parkbremse 1 für Kraftfahrzeuge weist Bremslamellen 2 auf einem drehbaren Getriebeteil oder drehbaren Achskörper 3 in einem feststehenden Gehäuse 4 auf und Federn 5 in einem feststehenden Gehäuse 6, mit denen die Bremslamellen 2 zusammengedrückt werden. Ein im Gehäuse 6 geführter Kolben 7 beaufschlagt über Bolzen 8 und ein im feststehenden Gehäuse 4 gehaltenes Druckübertragungselement 9 die Bremslamellen 2 gegen die Kraft der Federn 5, wenn ein Kolbenraum 10 über eine mit einem Verschluß 11 abgeschlossene Leitung 12 mit hydraulischem Druck beaufschlagt wird. Eine Scheibe 13 begrenzt den Kolbenraum 10 hydraulisch dicht. Bolzen 8 sind hydraulisch dichtend durch die Scheibe 13 geführt. Bolzen 8, Kolben 7 und Scheibe 13 sind jeweils am Umfang mit Dichtringen 14 versehen. Scheibe 13 liegt an einem Anschlag 15 im Gehäuse 6 an.

Eine Sackbohrung 16 im Kolben 7 ist vorgesehen mit je einem Bolzen 8, der mit einem zylindrischen Abschnitt 17 in der Sackbohrung 16 des Kolbens 7 und einem Abschnitt 18 hydraulisch dicht in der Scheibe 13 gehalten ist, wobei der Bolzen 8 im zylindrischen Abschnitt 17 eine radiale Nut 19 aufweist. Die Sackbohrung 16 im Kolben 7 ist mit einer entsprechenden radialen Nut 20 ausgebildet. Ein Sprengring 21 ist vorgesehen, der in die radialen Nuten 19, 20 des zylindrischen Abschnitts 17 des Bolzens 8 und der Sackbohrung 16 im Kolben 7 montiert werden kann.

Verfahren zur Montage der Parkbremse für Kraftfahrzeuge gemäß der Erfindung.

Bei der Montage wird der Sprengring 21 in die radiale Nut 19 des zylindrischen Abschnitts 17 des Bolzens 8 eingesetzt wird, und der Bolzen 8 mit dem Sprengring 21 in die Sackbohrung 16 eingeführt bis der Sprengring 21 in die radiale Nut 20 der Sackbohrung 16 im Kolben 7 einschnappt.

Oder die Montage erfolgt so, daß der Sprengring 21 in die radiale Nut 20 der Sackbohrung 16 im Kolben 7 eingesetzt wird, und der Bolzen 8 in die Sackbohrung 16 eingeführt wird bis der Sprengring 21 in die radiale Nut 19 des zylindrischen Abschnitts 17 des Bolzens 8 einschnappt.

### Fig. 2:

Durch Drucklosschalten der Leitungen 12 und 23 wird über die Federkraft der Feder 5 der Kolben 7 und über diesen der Bolzen 8 auf den Kolben 24 gedrückt, welcher entgegen der Federkraft der Feder 25 die Bremse schließt. Der Kolben 7 weist eine Sackbohrung 16 auf, in welche der Bolzen 8 eingreift, wobei der Bolzen 8 über die radiale Nut 19, die radiale Nut 20 und den Sprengring 21 mit dem Kolben 7 verbunden ist. Durch Druckbeaufschlagen der Leitung 12 wird der Kolben 24, der Bolzen 8 und der Kolben 7 durch die Federkraft der Feder 25 und die Druckkraft im Raum 10 zurückgedrückt.

### Bezugszeichen

- 1: Parkbremse
- 2: Bremslamelle
- 3: Achskörper
- 4: Gehäuse
- 5: Federn
- 6: Gehäuse
- 7: Kolben
- 8: Bolzen
- 9: Druckübertragungselement
- 10: Kolbenraum
- 11: Verschluß
- 12: Leitung
- 13: Scheibe
- 14: Dichtringe
- 15: Anschlag
- 16: Sackbohrung
- 17: Zylindrischer Abschnitt
- 18: Bolzenabschnitt
- 19: Radiale Nut
- 20: Radiale Nut
- 21: Sprengring
- 22: Bolzenabschnitt
- 23: Leitung
- 24: Kolben
- 25: Feder

## Patentansprüche

1. Parkbremse (1) für Kraftfahrzeuge mit
- mindestens einer Bremslamelle (2) auf einem Achskörper (3) in einem Bremsgehäuse (4),
- Federn (5), mit denen die Bremslamellen (2) zusammengedrückt werden,
- einem Kolben (7), der die Bremslamellen (2) gegen die Kraft der Federn (5) löst, wenn ein Kolbenraum (10) mit Druck beaufschlagt wird,
- mit mindestens einer Bohrung (16) im Kolben (7) mit je einem Bolzen (8), der mit einem zylindrischen Abschnitt (17) in der Bohrung (16) des Kolbens (7) gehalten ist, wobei der Bolzen (8) im zylindrischen Abschnitt (17) in der Bohrung (16) des Kolbens (7) eine radiale Nut (19) aufweist,
**dadurch gekennzeichnet, daß** die Bohrung (16) im Kolben (7) als Sackbohrung mit einer radialen Nut (20) ausgebildet ist, und ein Sprengring (21) vorgesehen ist, der in die radialen Nuten (19, 20) des zylindrischen Abschnitts (17) des Bolzens (8) und der Sackbohrung (16) im Kolben (7) montiert werden kann.

2. Verfahren zur Montage einer Parkbremse (1) für Kraftfahrzeuge gemäß Anspruch 1, **dadurch gekennzeichnet, daß** der Sprengring (21) in die radiale Nut (19) des zylindrischen Abschnitts (17) des Bolzens (8) eingesetzt wird, und der Bolzen (8) mit dem Sprengring (21) in die Sackbohrung (16) eingeführt wird bis der Sprengring (21) in die radiale Nut (20) der Sackbohrung (16) im Kolben (7) einschnappt.

3. Verfahren zur Montage einer Parkbremse (1) für Kraftfahrzeuge gemäß Anspruch 1, **dadurch gekennzeichnet, daß** der Sprengring (21) in die radiale Nut (20) der Sackbohrung (16) im Kolben (7) eingesetzt wird, und der Bolzen (8) in die Sackbohrung (16) eingeführt wird bis der Sprengring (21) in die radiale Nut (19) des zylindrischen Abschnitts (17) des Bolzens (8) einschnappt.

## Claims

1. Parking brake (1) for motor vehicles having
- at least one brake disc (2) on an axle body (3) in a brake housing (4),
- springs (5), by means of which the brake discs (2) are pressed together,
- a piston (7), which opens the brake discs (2) counter to the force of the springs (5) when a piston chamber (10) is loaded with pressure,
- having at least one bore (16) in the piston (7) with in each case one bolt (8), which is held by a cylindrical portion (17) in the bore (16) of the piston (7), wherein the bolt (8) in the cylindrical portion (17) in the bore (16) of the piston (7) has a radial groove (19),
**characterized in that** the bore (16) in the piston (7) is designed as a blind hole with a radial groove (20), and a snap ring (21) is provided, which may be fitted into the radial grooves (19, 20) of the cylindrical portion (17) of the bolt (8) and of the blind hole (16) in the piston (7).

2. Method of assembling a parking brake (1) for motor vehicles according to claim 1, **characterized in that** the snap ring (21) is inserted into the radial groove (19) of the cylindrical portion (17) of the bolt (8), and the bolt (8) with the snap ring (21) is introduced into the blind hole (16) until the snap ring (21) snaps into the radial groove (20) of the blind hole (16) in the piston (7).

3. Method of assembling a parking brake (1) for motor vehicles according to claim 1, **characterized in that** the snap ring (21) is inserted into the radial groove (20) of the blind hole (16) in the piston (7), and the bolt (8) is introduced into the blind hole (16) until the snap ring (21) snaps into the radial groove (19) of the cylindrical portion (17) of the bolt (8).

## Revendications

1. Frein de stationnement (1) pour véhicules automobiles, comprenant
- au moins un disque de frein (2) monté sur un corps d'essieu (3) dans un carter de frein (4),
- des ressorts (5) avec lesquels les disques de frein (2) sont pressés les uns contre les autres,
- un piston (7) qui relâche les disques de frein (2) à l'encontre de la force des ressorts (5) lorsqu'une chambre de piston (10) est alimentée avec de la pression,
- au moins un alésage (16) ménagé dans le piston (7) avec à chaque fois une tige (8) qui est tenue dans l'alésage (16) du piston (7) par un segment cylindrique (17), la tige (8) comportant une gorge radiale (19) dans le segment cylindrique (17) à l'intérieur de l'alésage (16) du piston (7),
**caractérisé en ce que** l'alésage (16) ménagé dans le piston (7) est constitué par un alésage borgne ayant une gorge radiale (20), et **en ce qu'**il est prévu un circlip (21) qui peut être monté dans les gorges radiales (19, 20) du segment cylindrique (17) de la tige (8) et de l'alésage borgne (16) du piston (7).

2. Procédé pour le montage d'un frein de stationnement (1) pour véhicules automobiles selon la revendication 1, **caractérisé en ce que** l'on met le circlip (21) en place dans la gorge radiale (19) du segment cylindrique (17) de la tige (8) et l'on introduit la tige (8) avec le circlip (21) dans l'alésage borgne (16) jusqu'à ce que le circlip (21) s'encliquette dans la gorge radiale (20) de l'alésage borgne (16) du piston (7).

3. Procédé pour le montage d'un frein de stationnement (1) pour véhicules automobiles selon la revendication 1, **caractérisé en ce que** l'on met le circlip (21) en place dans la gorge radiale (20) de l'alésage borgne (16) du piston (7) et l'on enfonce la tige (8) dans l'alésage borgne (16) jusqu'à ce que le circlip (21) s'encliquette dans la gorge radiale (19) du segment cylindrique (17) de la tige (8).
